# EUROPEAN PATENT SPECIFICATION

(11) **EP 1 310 115 B1**
(45) Date of publication and mention of the grant of the patent: **26.04.2006**
(21) Application number: 01958242.8
(22) Date of filing: 17.08.2001
(51) Int. Cl.: H04Q 7/22, H04Q 7/28

(54) **SHORT DATA MESSAGES IN MOBILE COMMUNICATIONS SYSTEMS**
KURZE DATENNACHRICHTEN IN MOBILKOMMUNIKATIONSSYSTEMEN
MESSAGES DE DONNEES COURTS DANS DES SYSTEMES DE COMMUNICATION DU SERVICE MOBILE

(30) Priority: 17.08.2000 GB 0020323
(43) Date of publication of application: 14.05.2003
(73) Proprietor: Sepura Limited, Cambridge CB4 1GR (GB)
(72) Inventor: Rayne, Mark, Wentworth, Nr. Ely Cambridgeshire CB6 3ND (GB); Travett, Richard, John, Kings Hedges Cambridge CB4 2UH (GB)
(74) Representative: Tothill, John Paul
(86) International application number: PCT/GB2001/003734
(87) International publication number: WO 2002/017659

(56) References cited:
- EP-A- 0 957 651
- WO-A-00/48416
- WO-A-99/39524
- GB-A- 2 327 567

## Description

The present invention relates to the transmission of short data messages in mobile communications systems and in particular to the transmission of encrypted short data messages.

Many mobile communications systems support.the transmission of short data messages in addition to voice communication, for, for example, carrying various types of data such as location information, text messages, status (e.g. of the radio-user) messages, telemetry, and alarm and warning messages. The Short Data Service (SDS) mechanism of the TETRA (TErrestrial Trunked RAdio) system (see, e.g., ETSI ETS 300 392-2) is one such short data message protocol. The Short Message Service (SMS) of the GSM (Global System for Mobile communications) system (see, e.g. Michel Mouly and Marie-Bernadette Pautet *The GSM System for Mobile Communications,* Cell & Sys, 1992 ISBN 2-9507190-0-7) is another. A similar short message service is available on MPT 1327 analogue trunked radio systems (see, e.g., MPT 1327 DTI).

It is becoming increasingly desirable to users of such communications systems to be able to encrypt their short data message transmissions. Some communications systems such as TETRA and GSM, automatically provide encryption over the air interface link (using in TETRA the standard air interface mechanism). However, it is becoming increasingly desirable to provide so-called 'end-to-end encryption' (i.e. to have the short data messages encrypted all the way from the sender to the recipient), as, for example, many users, such as public safety users, may not wish to rely on the security of the existing air interface encryption alone or may not trust the security of the fixed infrastructure.

However, many communications systems may not directly support end-to-end encryption of short data messages. For example, while the TETRA system provides for air-interface encryption of all communications and end-to-end encryption of voice communication, the basic TETRA standard does not directly provide for end-to-end encryption of short data messages.

FI 990 256 A and WO 00/48416 A describe a short data message structure for a mobile communications system that includes a field that can define the message as being encrypted.

It is an object of the present invention to provide mechanisms for helping the TETRA system to support end-to-end encryption of short data messages.

The Applicants have recognised in particular that where end-to-end encryption of short data messages is to be used, there must be some way of indicating to the recipient that the message includes an encrypted user or wanted message, so as to allow the recipient to process the message properly.

According to a first aspect of the present invention, there is provided a method of transmitting a short data message in a TETRA mobile communications system, comprising: when the short data message includes an encrypted message, including with the short data message an indication of that fact; the method further comprising: using particular protocol identifier values as the encryption indication and forming the short data message to comprise the encryption indicating protocol identifier, followed by an encrypted part of the short data message containing a protocol identifier for the message that is encrypted and the encrypted message.

According to a second aspect of the present invention, there is provided an apparatus for transmitting a short data message in a TETRA mobile communications system, the apparatus comprising: means for, when the short data message includes an encrypted message, including with the short data message an indication of that fact, comprising means for using particular protocol identifier values as the encryption indication and means for forming the short data message to comprise the encryption indicating protocol identifier, followed by an encrypted part of the short data message containing a protocol identifier for the message that is encrypted and the encrypted message.

According to further aspects of the present invention, a corresponding short data message and a computer program element are provided.

In the present invention, when a short data message including an encrypted message is being transmitted, a separate indication of that fact (over and above the mere fact that the message itself is encrypted) is included with the short data message. This provides a convenient mechanism for indicating to the recipient the presence of an encrypted message in the short data message.

The encryption indication precedes the encrypted message. Its position should be known to the receiver and is preferably therefore predetermined or its location previously indicated to the receiver (e.g. in an earlier message). The encryption indication is preferably placed towards the start of the message, e.g. it prefixes the encrypted short data message, and preferably precedes the user data in the message as this is more convenient where the messages may be of variable length (as it avoids the need to 'pad out' short messages in such circumstances).

The encryption indication is preferably not itself encrypted (to allow the recipient to read it).

The encryption indication could always be present and have two states, indicating respectively "encrypted message" and "unencrypted message". Alternatively, the indication could only be included with the message when it is encrypted or includes an encrypted message, but not otherwise (i.e. such that an unencrypted message is sent as normal).

If the message is not encrypted then the encryption indication, if present, would be set to "not encrypted", and the remainder of the message arranged as normal.

If the message is encrypted or contains an encrypted message, then the encryption indication would be included with it and set to "encrypted". The message to be encrypted would be encrypted and sent in an encrypted form in the message.

The message to be sent in an encrypted form can be any suitable such message that would normally be sent in a short data message but not necessarily always in an encrypted form (and for example may typically not be end-to-end encrypted in normal use, and/or, for example, would not be mandated to be sent in an encrypted form in the communications system in question). It would typically be a user message and/or an application message, such as a text message, status message, position update, etc., that conveys or can convey information (e.g. wanted data) to another user of the system, and/or information from an end user or an end user application, rather than a message that conveys system data, such as an OTAR (over-the-air-rekeying) parameters message, that allows the system to operate but does not convey information proper to an end user.

The message to be sent in an encrypted form can be included in the short data message that is sent as desired. It could for example be formed by encrypting the original user message (e.g. text message, position update, GPS message, etc.), and then placing the encrypted user message in the "user message" field of the standard short data message format, with the remainder of the message being a 'normal' short data message (and including the usual short data message headers, etc.) in an unencrypted form, save for the presence of the encryption indication.

However, in a particularly preferred embodiment, the message to be sent in an encrypted form is first arranged in part or all of a normal short data message structure including some or all of the usual short data message system data headers, fields, etc, (and preferably at least one such header or field that conveys system operation data), and then the so-formed 'normal' short data message or short data message part is encrypted and included with the encryption indication in the actual short data message that is transmitted. Most preferably the encrypted normal short data message, or short data message.part (preferably together with any remaining normal short data message headers, etc. that would be in a normal short data message, but which are not in the encrypted short data message part), is then packaged into a standard short data message structure, i.e. it is effectively placed in an apparently normal short data message wrapper, but which structure (wrapper) includes the indication that the message it contains is an encrypted short data message. Upon seeing this indication, the recipient would then decrypt the original short data message and thereafter process it as a normal short data message.

Where the message is encrypted, it would typically also need to include further encryption information, for example in the form of an encryption header, to allow the recipient to decrypt the message. This encryption information or header preferably follows the encryption indication and is preferably in a predetermined or prearranged location in the message to allow its easy identification by the recipient. Where appropriate, it is preferably placed appropriately in the overall short data message "wrapper", outside the encrypted short data message. It is preferably placed towards the start of the message to allow for variable length messages, as discussed above.

TETRA provides a number of different short data message types: short "status" messages, free format SDS messages, and so-called type-4 SDS messages. The Applicants believe that it will most likely be desirable to use type-4 SDS messages for end-to-end encryption, as they can contain more user-defined data and therefore a longer user message, and as such have a greater capacity to carry the user data together with the necessary encryption synchronisation information such as the encryption synchronisation vector, etc., that may be needed to allow the message to be decrypted.

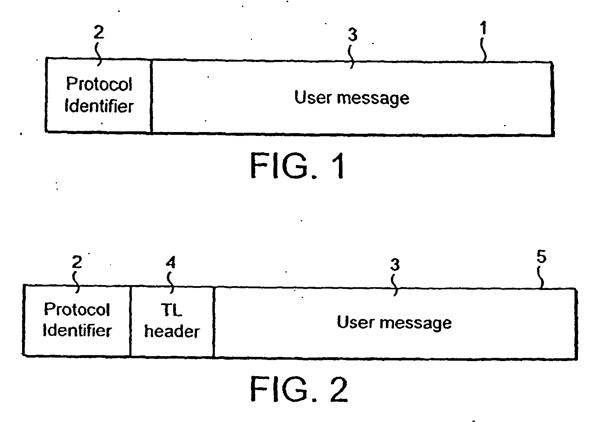

TETRA type-4 SDS messages are defined in ETSI ETS 300 392-2, clause 29. Figure 1 illustrates the format of one arrangement of a type-4 SDS message. The message 1 includes a leading "SDS Protocol Identifier" part or field 2 which comprises the first 8 bits of the message. The protocol identifier enables the SDS application in the radio terminal to route the remaining contents of the SDS message to its intended application, and permits correct decoding of the message. (Possible applications include key management of end-to-end encryption (OTAR - over-the-air-rekeying), text messaging, wireless datagram protocol WAP, wireless control message protocol WCMP, managed TETRA Direct Mode, PIN authentication, and GPS position information (see, e.g. ETSI ETS 300-392-2, 29.4.3.8)). The user message 3 follows the protocol identifier 2.

Type-4 SDS messages can also use an additional protocol layer or facility known as the Short Data Service Transport Layer (SDS-TL) data transfer service (see, e.g., ETSI ETS 300 392-2; 29, 29.4.1, 29.4.2, and Annex J). This additional protocol layer enhances the Short Data Service protocol and improves message transport reliability, etc, by providing protocol mechanisms for, for example, end-to-end acknowledgement, and store and forward functions. It also ensures that applications using this service interpret the user data in the same way.

When the SDS-TL protocol is in use, the short data message includes additional header information, in the form of an SDS-TL header. Figure 2 illustrates such a message 5. The SDS-TL header 4 is inserted after the protocol identifier 2, but before the user message 3. In a type-4 SDS message, the first bit of the protocol identifier 2 indicates if the SDS-TL protocol is in use (see, e.g., ETSI ETS 300 392-2; 29.4.1 and Annex J) and therefore, for example, if a TL-header is included in the message.

Thus in the application of the present invention to a TETRA type-4 SDS message, the encryption indication could, for example, follow the protocol identifier and precede or follow the SDS-TL header, if any. The encrypted message would then follow and, have, when decrypted, the Standard Type-4 SDS format.

Where the TETRA SDS-TL protocol is being used, the SDS-TL header may be encrypted if desired. However, the Applicants believe that it would generally be preferable not to encrypt the TL header, as it may be useful for the information it contains to still be readable by units of the system, e.g. the system infrastructure, or another mobile unit, which are not the intended recipient of the message (and so cannot decrypt the entire message). For example, the TL header may contain information which may be used by the system infrastructure to determine whether and how long to store or forward the message. It would be useful for the infrastructure still to be able to read this information even if it cannot, and is not intended to, decipher the entire message. However, if the TL header is encrypted, the infrastructure will be unable to decode it.

It may also be preferable for a mobile station to be able to read the TL header even if it is unable to decrypt the rest of the message. This is because the TL header may, for example, indicate whether the mobile station should report successful or failed reception of the message.

Indeed, in a preferred embodiment of the present invention, the intended recipient of the message (e.g. the recipient mobile station) reports back an error message, such as "encoding not supported", if it cannot decrypt the message. This could be done in a TETRA system using a short report (see, e.g., ETSI ETS 300-392-2, 29.4.3.10) used in the TETRA SDS-SHORT REPORT PDU (ETSI ETS 300-392-2; 29.4.2.3), or as a new value meaning "unable to decrypt message" in the "Delivery Status" parameter (ETSI ETS 300-392-2; 29.4.3.2) used in the SDS-REPORT PDU (ETSI ETS 300-392-2, 29.4.2.2).

In a TETRA, SDS-TL protocol, arrangement, whether or not the TL header is to be encrypted could, for example, be predetermined, or pre-arranged in use (e.g. indicated to the recipient in an earlier message), or indicated by the encryption indication (e.g. by it taking a particular value) or within the encryption header (if any) included in the short data message.

Although the above described sequences of encryption indications, headers and user messages are preferred and convenient, in practice the order is unimportant so long as the relevant parties know the order to be used and to expect.

The encryption indication of the present invention is given by using a particular TETRA protocol identifier value or values as the encryption indication. This means that the encryption indication is given by setting a value of an existing part or field of the TETRA short data message structure to have a particular value or values. (As is known in the art, the TETRA short data message arrangements include headers or similar parts or fields that contain "structure data", i.e. data required for the system to operate but not otherwise conveying user information proper, rather than proper user information or wanted data, one of which is the "Protocal Identifier" (PID). These "structure data" elements are normally set to particular values to convey particular information to allow the system to operate, but there are spare, unused values to which these parts, headers, fields, etc., can be set to that have not been allocated particular meanings. The present invention uses previously undefined PID values to have the meanings "encrypted message" or "unencrypted message", etc, and thereby to give the encryption indication.)

Including the encryption indication within the existing short data message structure of the TETRA communications system in this way, rather than by adding extra marker bits to the message structure, avoids having to add an additional encryption marker to the short data message. This avoids, for example, a drawback with simply adding an additional encryption indication marker to the existing short data message format e.g. as an additional bit or bits at the beginning of the message (which could then otherwise have the normal short data message structure of the communications system, save for it being encrypted and possibly including the encryption header) in that the existing short data message format for the TETRA communications system will not support the addition of a marker in this way, as it does not have the capacity for the extra bit or bits of an encryption marker. This is, for example, the case with TETRA type-4 SDS messages, as the capability of adding an extra marker in this way was not included when the type-4 SDS service was defined. Thus to add a marker onto a standard type-4 SDS message in TETRA is no longer so easy to implement, as it would require some redefinition of the type-4 SDS service.

In a TETRA system using Type-4 SDS messages, the invention is in one arrangement preferably implemented by the encryption indication being two encryption indicating protocol identifier values, one having the meaning "encrypted SDS message" and the other having the meaning "encrypted SDS-TL message", to enable the decrypting recipient station to detect the presence of the TL header when the SDS-TL protocol is being used.

In such an arrangement, when one of these protocol identifiers is used, it is preferably followed by the encryption header (if any) and then an encrypted version of the original message before the encryption was added, i.e. an encrypted message containing the true protocol identifier, SDS-TL header (if any) and the user message. In other words, the original message is effectively formatted as usual and then encrypted, and then the encrypted message mapped onto the usual SDS message format, but with the so-formed message having a special protocol identifier value that identifies it as containing an encrypted SDS message.

As discussed above, while it may generally be preferable to keep the TL-header unencrypted, in some circumstances, it may be desirable to encrypt it. It is preferably therefore possible for the recipient to determine if the TL-header is encrypted.

This could be achieved, for example, by having three different protocol identifier values, representing "encrypted SDS message", "encrypted SDS-TL message with unencrypted TL header", and "encrypted SDS-TL message with encrypted TL header". An infrastructure seeing, for example, the protocol identifier "encrypted SDS-TL message with unencrypted TL header" would then be able to look for the TL-header and manage the message in the same way as any other SDS-TL message.

However, the Applicants have recognised that in a TETRA system, a protocol identifier having its most significant bit set to "0" indicates to the system infrastructure and mobile stations that they should not attempt to read a TL header, whereas as a "1" in the most significant bit indicates that a TL header should be looked for (see, e.g., ETSI ET3 300-392-2; Annex J). Thus as a TL header should not be read in an encrypted SDS message and an encrypted SDS-TL message with an encrypted TL header, a protocol identifier with its most significant bit set to "0" can be used to indicate and to allow the system to process correctly such messages. As the TL header should be looked for in an encrypted SDS-TL message with an unencrypted TL header, a protocol identifier with its most significant bit set to "1" can be used to indicate and to allow the system to process correctly such messages. In this way only two protocol identifier values are needed to indicate adequately the above three possible message states.

Thus, in a particularly preferred embodiment, two, and preferably only two, protocol identifier values are used to indicate encryption, one having its first (most significant) bit set to "0" (zero) which is used for encrypted SDS messages and encrypted SDS-TL message with an encrypted TL-header, and the other having its first (most significant) bit set to "1" (one) which is used for encrypted SDS-TL messages with an unencrypted TL-header.

Thus any SDS-TL message in which the TL header is unencrypted is preferably sent with a protocol identifier having its most significant bit set to "1", so that the recipients know to look for the TL header. An SDS-TL message in which the TL-header is encrypted is preferably sent with a protocol identifier value having a "0" as its most significant bit (as would be an encrypted SDS message), thereby effectively instructing a recipient not to look for a TL header. In this latter case, the fact that the message is in fact an SDS-TL message with an encrypted TL-header will become apparent when the message is decrypted, because the protocol identifier of the original message will then be visible. The message may then be decoded, managed, acknowledged, and disposed of as with any normal unencrypted type-4 SDS message.

Although it is preferred to use two or three and preferably only two protocol identifier values in this arrangement as discussed above, more such values could be used if it is for example desired to use different protocol identifier values for different types of encrypted messages. Thus protocol identifier values (other than those already defined for another purpose) may be predefined to indicate, for example, the type of encrypted message that follows, such as whether it is an encrypted text message, an encrypted GPS message, etc. These protocol identifier values preferably have their most significant bits set to "0" or "1", to indicate the presence of an unencrypted TL-header as appropriate, as discussed above.

Thus more generally speaking, the encryption indication of the present invention can also be used to indicate the type of the encrypted message, if desired, e.g. by giving it different values depending on the type of encrypted message.

Short data messages in accordance with the present invention can be assembled and transmitted as desired. In a particularly preferred embodiment, as discussed above, such transmission comprises the basic user message (e.g. GPS message) being formed, and then packaged in the relevant short data message (e.g. TETRA SDS or SDS-TL) format. The so-formatted message is then encrypted.

The need for encryption can be indicated, for example, by the user. Alternatively or additionally, it could be predetermined that certain messages should be encrypted or should be encrypted when certain predetermined conditions are met. For example, it is usually desirable that position information messages in particular are encrypted. Additionally or alternatively, the destination of the message could be used to trigger end-to-end encryption, and/or to at least select the appropriate encryption key. (However, it is preferred that the application determines the use of encryption.) Preferably, if an encryption key is not available for a particular destination, the message is inhibited.

The so-encrypted message is then further packaged into the relevant short data message format, but with the encryption indication included in it by setting a protocol identifier within the formed short data message to have a particular value, together with, if appropriate, a cryptographic header indicating the parameters to be employed for decryption. The so-assembled short data message can then be passed for transmission over the radio interface.

Receiving and decrypting an incoming short data message containing an encrypted message would follow the reverse process.

Thus in a preferred embodiment of the present invention, the method comprises:
forming the message to be encrypted;
providing a protocol identifier value for the message to be encrypted;
encrypting the message to be encrypted and its protocol identifier value;
packaging the encrypted message and encrypted protocol identifier value in a TETRA SDS message format;
providing the so-formed SDS message with a further protocol identifier value that identifies the SDS message as containing an encrypted message; and
transmitting the so-constructed short data message.

Similarly, in a preferred embodiment of the present invention, the apparatus comprises:
means for forming the message to be encrypted;
means for providing a protocol identifier value for the message to be encrypted;
means for encrypting the message to be encrypted and its protocol identifier value;
means for packaging the encrypted message and encrypted protocol identifier value in a TETRA SDS message format;
means for providing the so-formed SDS message with a further protocol identifier value that identifies the SDS message as containing an encrypted message; and
means for transmitting the so-constructed short data message.

These embodiments of the present invention can include any one or more of the preferred features discussed above. For example, the standard short data message format that the original message is packaged into would be either the SDS or SDS-TL format (in which case the TL-header could be encrypted or unencrypted as desired) .

In a preferred embodiment the original short data message is marked with a temporary identity tag before it is encrypted, which tag is unaltered by the encryption process, so that the apparatus can identify the encrypted short data message and, for example, send it to the correct destination.

According to a third aspect of the present invention, there is provided a short data message for a TETRA mobile communications system, comprising: an encrypted message, and an indication that the short data message includes an encrypted message; wherein the encryption indication comprises a particular protocol identifier value and the short data message comprises the encryption indicating protocol identifier followed by an encrypted part of the short data message containing a protocol identifier for the message that is encrypted and the encrypted message.

This aspect of the invention can include any one or more of the preferred features discussed above.

The methods in accordance with the present invention may be implemented at least partially using software e.g. computer programs. It will thus be seen that when viewed from further aspects the present invention provides computer software specifically adapted to carry out the methods hereinabove described when installed on data processing means, and a computer program element comprising computer software code portions for performing the methods hereinabove described when the program element is run on data processing means. The invention also extends to a computer software carrier comprising such software which when used to operate a radio system or unit comprising a digital computer causes in conjunction with said computer said system or unit to carry out the steps of the method of the present invention. Such a computer software carrier could be a physical storage medium such as a ROM chip, CD ROM or disk, or could be a signal such as an electronic signal over wires, an optical signal or a radio signal such as to a satellite or the like.

It will further be appreciated that not all steps of the method of the invention need be carried out by computer software.

A number of preferred embodiments of the present invention will now be described by way of example only and with reference to the accompanying drawings, in which:
Figure 1 shows the structure of a TETRA type-4 SDS message;
Figure 2 shows the structure of a TETRA type-4 SDS-TL message;
Figure 3 illustrates the sending of an encrypted type-4 SDS message using a special protocol identifier in accordance with the present invention;
Figure 4 illustrates the sending of an encrypted type-4 SDS-TL message using a special protocol identifier in accordance with an embodiment of the present invention in which the TL header is encrypted;
Figure 5 illustrates the sending of an encrypted type-4 SDS-TL message using a special protocol identifier in accordance with an embodiment of the present invention in which the TL-header is not encrypted; and
Figure 6 is a schematic diagram showing how an encrypted message is handled in a transmitter in accordance with an embodiment of the present invention.

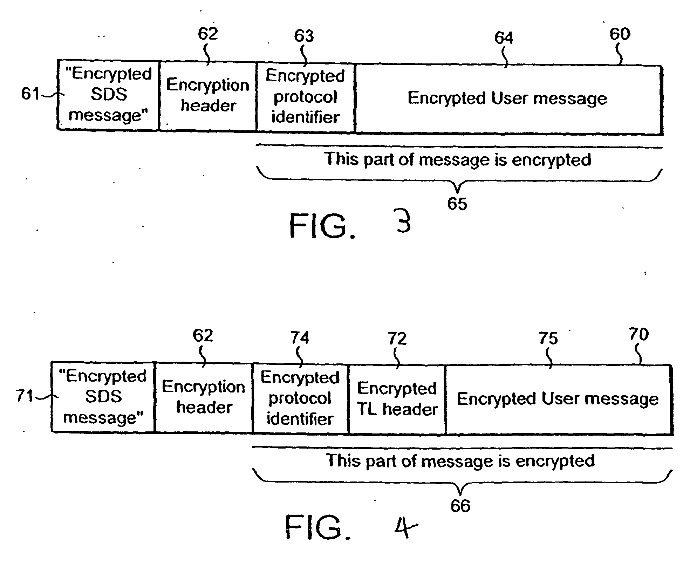

Figures 3, 4 and 5 show an embodiment of the present invention for transmitting encrypted TETRA type-4 SDS messages that use "protocol identifier" values with the meanings "encrypted SDS message" and "encrypted SDS-TL message" to indicate the presence of an encrypted message. This arrangement does not require any addition of an encryption marker to the format of normal TETRA SDS messages.

The SDS messages 60, 70, 77 shown in Figures 3, 4 and 5 each comprise the special protocol identifier 61, 71, 76 that indicates that the SDS message includes an encrypted user message (in these cases the true protocol identifier and user message are both encrypted), followed by an encryption header 62, 73, which might typically consist of an encryption algorithm indicator, a key identifier, an initial value (IV) for synchronisation, and, optionally, a time stamp and a check sum. This encryption header could have a length of, for example, 8 to 16 octets. The rest of each message follows the normal type-4 SDS message structure, but is encrypted. Thus they include an encrypted protocol identifier 63, 74 and the encrypted user message 64, 75.

In these embodiments, the header immediately follows the encrypted SDS message protocol identifier and thereafter, the format is the same as for unencrypted messages. (Alternatively, the encrypted SDS-TL message protocol identifier could be followed by the unencrypted TL-header, so that the infrastructure in particular can, for example, treat the message like any other SDS-TL message.)

Figure 3 shows the structure of an SDS message 60 for sending an encrypted type-4 SDS message in accordance with this embodiment. The message includes a leading special protocol identifier 61 indicating "encrypted SDS message", followed by the encryption header 62. There then follows the remaining encrypted part 65 of the message, which includes the normal, 'true' SDS protocol identifier 63 (which is now encrypted) and the encrypted user message 64. (Thus it can be seen that the parts 63 and 64 are effectively an encrypted normal SDS message which is then repackaged together with the encryption header 62, into an SDS 'wrapper' having the special "encrypted SDS message" protocol identifier 61.)

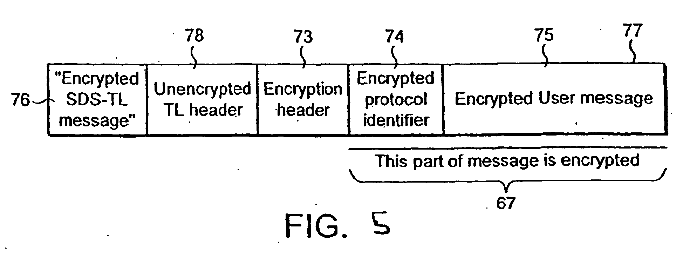

Figure 4 shows the structure of an SDS message 70 for sending an encrypted type-4 SDS-TL message in this embodiment with the TL-header encrypted. In that case, the special protocol identifier 71 "encrypted SDS message" heads the message 70 and is followed by an encryption header 62. The remaining part 66 of the message is encrypted and follows the same format as a normal SDS message, and thus includes the true protocol identifier 74 (which is encrypted), the TL-header 72 (which is encrypted) and the encrypted user message 75.

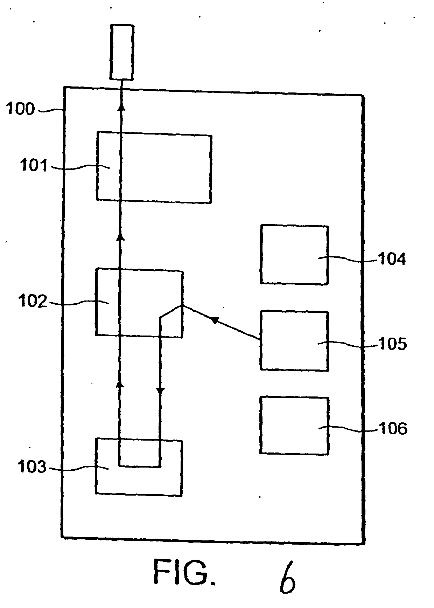

Figure 5 shows the structure of an SDS message 77 for sending an encrypted type-4 SDS-TL message, which is arranged in accordance with this embodiment but in which the TL-header is not encrypted. The message 77 includes the special protocol identifier 76 indicating "encrypted SDS-TL message", which is followed by the unencrypted TL-header 78 (which is preferably placed next, so that, for example, the infrastructure in particular can treat the message like any other SDS-TL message (although in practice the actual sequence of headers and indicators is unimportant so long as all parties know the sequence in advance)), and then the encryption header 73. The remaining part 67 of the message is then encrypted and includes the original, true protocol identifier 74 and the user message 75. The use of an unencrypted TL-header may be, for example, pre-arranged, or where the TL-header can be selectively unencrypted, this fact may be indicated appropriately in the encryption marker, e.g. by defining a third value for it.

Figure 6 shows schematically how encrypted short data messages in accordance with the present invention may be routed through a TETRA radio unit 100. The unit includes a GPS (Global Positioning System) unit 105, other modules 104, 106 which could be other applications such as text messaging or managed Direct Mode which may wish to send a received encrypted short data messages from time-to-time, a short data service (SDS) application unit 102, a cryptographic unit 103, and the normal TETRA lower protocol layers 101 which prepare the message for transmission over the radio interface.

Figure 6 illustrates the situation where it is desired to send a GPS short data message that is encrypted. The basic GPS message is sent from the GPS unit 105 to the SDS application unit 102. The SDS application unit packages the message in standard SDS or SDS-TL format (as required). The SDS application unit 102 also determines whether the message should be encrypted, possibly by noting an instruction from the GPS unit 105 or, for example, by reading some pre-stored information requiring messages from the GPS unit to be encrypted.

If the message is to be encrypted, the SDS application unit 102 sends the SDS message to the cryptographic unit 103. The cryptographic unit 103 encrypts the entire SDS or SDS-TL message and prepends the cryptographic header indicating the parameters to be employed for decryption. The cryptographic unit 103 then returns the message to the SDS application unit 102. The SDS application unit 102 then prepends the protocol identifier value "encrypted SDS message" or "encrypted SDS-TL message", etc., as appropriate, and passes the entire message to the lower protocol layers 101 for transmission over the radio interface. (In an alternative arrangement, the cryptographic unit 103 could prepend the "encrypted message" indication and then pass the message to the SDS application unit 102. This may be preferable, as it reduces the risk of unencrypted material being inadvertently mixed into encrypted material by the SDS application unit.)

If desired, the SDS application unit 102 can mark the SDS message with a temporary identity tag before passing it to the cryptographic unit 103. The cryptographic unit should then leave this tag unaltered, so that the SDS application unit 102 can identify the encrypted SDS and send it to the correct destination (for example as requested by the originating GPS application unit 105).

Receiving and decrypting an incoming SDS message would follow the reverse process, except that when the unencrypted SDS message is passed from the encryption unit 103 to the SDS application unit 102, the SDS application unit 102 would be able to read the true protocol identifier within the message and thereby pass the SDS message to its target application (e.g. a text displaying application unit, or, in the case of position information, a display unit displaying the locations of mobile units on a map on a screen).

As can be seen from the above, the present invention provides at least in its preferred embodiments a way of end-to-end encrypting TETRA SDS messages that builds on the existing TETRA SDS mechanism by adding end-to-end encryption to the existing SDS type-4 message structure.

## Claims

1. A method of transmitting a short data message in a TETRA mobile communications system, comprising: when the short data message includes an encrypted message, including with the short data message an indication of that fact; the method being **characterized by** further comprising using particular protocol identifier values as the encryption indication and forming the short data message (60) to comprise the encryption indicating protocol identifier (61), followed by an encrypted part (65) of the short data message containing a protocol identifier (63) for the message that is encrypted and the encrypted message (64).

2. The method of claim 1, wherein the encryption indication precedes the encrypted message.

3. The method of claim 1 or 2, wherein the encryption indication is also used to indicate the type of the encrypted message.

4. The method of claim 1, 2 or 3, wherein the message to be sent in an encrypted form comprises a text message, status message, or a position update message.

5. The method of any one of claims 1 to 4, wherein the short data message which is transmitted is packaged in a standard short data message structure of the TETRA communications system.

6. The method of any one of claims 1 to 5, wherein the short data message is sent as a type-4 SDS message.

7. The method of claim 6, wherein the message is sent as a type 4 SDS message using SDS-TL and the TL header (78) is sent unencrypted.

8. The method of any one of claims 1 to 7, wherein the transmitted short data message includes encryption information (62) to assist the recipient to decrypt the message.

9. The method of claim 8, wherein the encryption information follows the encryption indication and is located outside the encrypted part of the short data message.

10. The method of any one of the preceding claims, further comprising the recipient of the message reporting back an error message if it cannot decrypt the message.

11. The method of claim 10, wherein the error message is sent as a short report in the TETRA SDS-SHORT REPORT PDU, or as a particular value of the Delivery Status parameter used in the SDS-REPORT PDU.

12. The method of any one of claims 1 to 11, wherein two encryption indicating protocol identifier values are used, one to indicate an encrypted SDS message, and the other to indicate an encrypted SDS message using SDS-TL.

13. The method of any one of claims 1 to 11, wherein two protocol identifier values are used to indicate an encrypted message, one having its first bit set to "0" which is used for encrypted SDS messages and encrypted SDS messages using SDS-TL with an encrypted TL-header, and the other protocol identifier value having its first bit set to "1" and which is used for encrypted SDS messages using SDS-TL with an unencrypted TL-header.

14. The method of any one of the preceding claims, comprising arranging the message to be sent in an encrypted form in part or all of a normal short data message structure for the TETRA communications system including some or all of the usual short data message system data headers and fields; encrypting the so-formed short data message or short data message part; and including the encrypted so-formed short data message or short data message part with the encryption indication in the short data message that is transmitted.

15. The method of any one of the preceding claims, comprising:
forming the message (64) to be encrypted;
providing a protocol identifier value (63) for the message to be encrypted;
encrypting the message to be encrypted and its protocol identifier value;
packaging the encrypted message and encrypted protocol identifier value in a TETRA SDS message format;
providing the so-formed SDS message with a further protocol identifier value (61) that identifies the SDS message as containing an encrypted message; and
transmitting the so-constructed short data message.

16. The method of claim 15, wherein the short data message format that the original message is packaged into is either the SDS message format or the SDS message using SDS-TL format.

17. The method of claim 14, 15 or 16, further comprising marking the original short data message with a temporary identity tag before it is encrypted, which tag is unaltered by the encryption process, so that the the encrypted short data message can be identified.

18. The method of claim 14, 15, 16 or 17, further comprising the features of any one of claims 1 to 13.

19. A method of operating a TETRA mobile communications system, comprising transmitting or receiving a type-4 SDS message in accordance with any one of claims 1 to 18.

20. An apparatus for transmitting a short data message in a TETRA mobile communications system, the apparatus comprising: means (102) for, when the short data message includes an encrypted message, including with the short data message an indication of that fact, and being **characterized by** comprising means for using particular protocol identifier values as the encryption indication and means for forming the short data message (60) to comprise the encryption indicating protocol identifier (61), followed by an encrypted part (65) of the short data message containing a protocol identifier (63) for the message that is encrypted and the encrypted message (64).

21. The apparatus of claim 20, wherein the encryption indication precedes the encrypted message.

22. The apparatus of claim 20 or 21, wherein the short data message which is transmitted is packaged in a standard short data message structure of the TETRA communications system.

23. The apparatus of claim 20, 21 or 22, wherein the short data message is sent as a type-4 SDS message.

24. The apparatus of claim 23, wherein the message is sent as a type-4 SDS message using SDS-TL and the TL header (78) is sent unencrypted.

25. The apparatus of any one of claims 20 to 24, further comprising means (102, 103) for including in the transmitted short data message encryption information (62) to assist the recipient to decrypt the message.

26. The apparatus of any one of claims 20 to 25, wherein two encryption indicating protocol identifier values are used, one to indicate an encrypted SDS message, and the other to indicate an encrypted SDS message using SDS-TL.

27. The apparatus of any one of claims 20 to 26, comprising means (102) for arranging the message to be sent in an encrypted form in part or all of a normal short data message structure for the TETRA communications system including some or all of the usual short data message system data headers and fields; means (103) for encrypting the so-formed short data message or short data message part; and means (102) for including the encrypted so-formed short data message or short data message part with the encryption indication in the short data message that is transmitted.

28. The apparatus of any one of claims 20 to 27, comprising:
means (105) for forming the message to be encrypted;
means (102) for providing a protocol identifier value for the message to be encrypted;
means (103) for encrypting the message to be encrypted and its protocol identifier value;
means (102) for packaging the encrypted message (64) and encrypted protocol identifier value (63) in a TETRA SDS message format;
means (102) for providing the so-formed SDS message with a further protocol identifier value (61) that identifies the SDS message as containing an encrypted message; and
means for transmitting the so-constructed short data message.

29. The apparatus of claim 28, wherein the short data message format that the original message is packaged into is either the SDS message format or the SDS message using SDS-TL format.

30. The apparatus of claim 27, 28 or 29, further comprising means (102) for marking the original short data message with a temporary identity tag before it is encrypted, which tag is unaltered by the encryption process, so that the apparatus can identify the encrypted short data message.

31. The apparatus of claim 27, 28, 29 or 30, further comprising the features of any one of claims 20 to 26.

32. An apparatus for use in a TETRA mobile communications system, comprising means for transmitting or means for receiving a type-4 SDS message in accordance with any one of claims 20 to 31.

33. A short data message for a TETRA mobile communications system, comprising: an encrypted message (64), and an indication that the short data message includes an encrypted message; wherein the encryption indication comprises a particular protocol identifier value and the short data message (60) is **characterised by** comprising the encryption indicating protocol identifier (61) followed by an encrypted part (65) of the short data message containing a protocol identifier (63) for the message that is encrypted and the encrypted message (64).

34. The short data message of claim 33, wherein the encryption indication precedes the encrypted message.

35. The short data message of claim 33 or 34, wherein the short data message is a TETRA type-4 SDS message.

36. The short data message of claim 35, wherein the message is a type-4 SDS message using SDS-TL and the TL header (78) is unencrypted.

37. The short data message of any one of claims 33 to 36, further comprising encryption information (62) to assist the recipient to decrypt the message.

38. The short data message of claim 37, wherein the encryption information follows the encryption indication and is located outside the encrypted part of the short data message.

39. A computer program element comprising computer software code portions for performing the method of any one of claims 1 to 19 when the program element is run on data processing means.

## Patentansprüche

1. Ein Verfahren zum Übertragen einer Kurzdatennachricht (englisch: short data message) in einem TETRA mobilen Kommunikationssystem, mit: im Falle, dass die Kurzdatennachricht eine verschlüsselte Nachricht umfasst, einen Hinweis auf diese Tatsache innerhalb der Kurzdatennachricht, wobei das Verfahren **dadurch gekennzeichnet ist, dass** es ferner umfasst: Verwenden bestimmter Protokollkennungswerte als Verschlüsselungshinweis und Bilden der Kurzdatennachricht (60) zum Umfassen der verschlüsselungshinweisenden Protokollkennung (61), gefolgt von einem verschlüsselten Teil (65) der Kurzdatennachricht mit einer Protokollkennung (63) für die Nachricht, die verschlüsselt ist und der verschlüsselten Nachricht (64).

2. Verfahren nach Anspruch 1, wobei der Verschlüsselungshinweis der verschlüsselten Nachricht vorangeht.

3. Verfahren nach Anspruch 1 oder 2, wobei der Verschlüsselungshinweis auch zum Anzeigen der Art der verschlüsselten Nachricht verwendet wird.

4. Verfahren nach Anspruch 1, 2 oder 3, wobei die in einer verschlüsselten Form zu versendende Nachricht eine Textnachricht, eine Statusnachricht, oder eine Positionsaktualisierungsnachricht umfasst.

5. Verfahren nach einem der Ansprüche 1 bis 4, wobei die Kurzdatennachricht, die übertragen wird, in einer Standardkurzdatennachrichtenstruktur des TETRA-Kommunikationssystems verpackt wird.

6. Verfahren nach einem der Ansprüche 1 bis 5, wobei die Kurzdatennachricht als eine Typ-4 SDS-Nachricht versendet wird.

7. Verfahren nach Anspruch 6, wobei die Nachricht als eine Typ-4 SDS-Nachricht unter Verwendung SDS-TL versendet wird und der TL-Header (78) unverschlüsselt versendet wird.

8. Verfahren nach einem der Ansprüche 1 bis 7, wobei die übertragene Kurzdatennachricht Verschlüsselungsinformationen (62) umfasst, um den Empfänger zu unterstützen, die Nachricht zu entschlüsseln.

9. Verfahren nach Anspruch 8, wobei die Verschlüsselungsinformation dem Verschlüsselungshinweis folgt und außerhalb des verschlüsselten Teils der Kurzdatennachricht lokalisiert ist.

10. Verfahren nach einem der vorhergehenden Ansprüche, ferner umfassend, dass der Empfänger der Nachricht eine Fehlermeldung rückmeldet, wenn die Nachricht nicht entschlüsselt werden kann.

11. Verfahren nach Anspruch 10, wobei die Fehlermeldung als eine Kurzmeldung in der TETRA SDS-SHORT REPORT PDU gesendet wird oder als ein besonderer Wert der Auslieferungszustand-Parameter, die in der SDS-REPORT PDU verwendet werden.

12. Verfahren nach einem der Ansprüche 1 bis 11, wobei zwei verschlüsselungsanzeigende Protokollkennungswerte verwendet werden, wobei eine eine verschlüsselte SDS-Nachricht anzeigt und die andere eine verschlüsselte SDS-Nachricht, die SDS-TL verwendet, anzeigt.

13. Verfahren nach einem der Ansprüche 1 bis 11, wobei zwei Protokollkennungswerte verwendet werden, um eine verschlüsselte Nachricht anzuzeigen, wobei eine, deren erstes Bit auf "0" gesetzt ist, für verschlüsselte SDS-Nachrichten und verschlüsselte SDS-Nachrichten, die SDS-TL mit einem verschlüsselten TL-Header verwenden, verwendet wird, und der andere Protokollkennungswert, dessen erstes Bit auf "1" gesetzt ist, für verschlüsselte SDS-Nachrichten, die SDS-TL mit einem unverschlüsselten TL-Header verwenden, verwendet wird.

14. Verfahren nach einem der vorhergehenden Ansprüche, mit: Anordnen der Nachricht, welche in einer verschlüsselten Form versendet werden soll, teilweise oder vollständig in eine normale Kurzdatennachrichtenstruktur des TETRA-Kommunikationssystems mit einigen oder allen der üblichen Kurzdatennachrichtsystemdatenheadern und -feldern; Verschlüsseln der so gebildeten Kurzdatennachricht oder des Kurzdatennachrichtenteils und Einbinden der verschlüsselten so gebildeten Kurzdatennachricht oder des Kurzdatennachrichtenteils mit dem Verschlüsselungshinweis in die Kurzdatennachricht, die übertragen wird.

15. Verfahren nach einem der vorhergehenden Ansprüche mit:
Bilden der Nachricht (64), die verschlüsselt werden soll;
Bereitstellen eines Protokollkennungswerts (63) für die zu verschlüsselnde Nachricht;
Verschlüsseln der zu verschlüsselnden Nachricht und deren Protokollkennungswerts;
Packen der verschlüsselten Nachricht und des verschlüsselten Protokollkennungswertes in einem TETRA SDS-Nachrichtenformat;
Bereitstellen der so gebildeten SDS-Nachricht mit einem weiteren Protokollkennungswert (61), der die SDS-Nachricht als eine eine verschlüsselte Nachricht enthaltende Nachricht identifiziert; und
Übertragen der so konstruierten Kurzdatennachricht.

16. Verfahren nach Anspruch 15, wobei das Kurzdatennachrichtenformat in welches die Originalnachricht gepackt ist, entweder das SDS-Nachrichtenformat oder die SDS-Nachricht, die SDS-TL-Format verwendet, ist.

17. Verfahren nach Anspruch 14, 15 oder 16, ferner mit:
Kennzeichnen der Originalkurzdatennachricht mit einer temporären Kennungsmarke, bevor sie verschlüsselt wird, wobei die Marke durch den Verschlüsselungsprozess unverändert bleibt, so dass die verschlüsselte Kurzdatennachricht identifiziert werden kann.

18. Verfahren nach Anspruch 14, 15, 16 oder 17, ferner mit den Merkmalen von einem der Ansprüche 1 bis 13.

19. Ein Verfahren zum Betreiben eines TETRA mobilen Kommunikationssystems, mit: Übertragen oder Empfangen einer Typ-4 SDS-Nachricht gemäß einem der Ansprüche 1 bis 18.

20. Eine Vorrichtung zum Übertragen einer Kurzdatennachricht in einem TETRA mobilen Kommunikationssystem, wobei die Vorrichtung umfasst: Mittel (102) zum, wenn die Kurzdatennachricht eine verschlüsselte Nachricht umfasst, Aufnehmen eines Hinweises auf diese Tatsache in der Kurzdatennachricht, und **dadurch gekennzeichnet ist, dass** sie Mittel zum Verwenden bestimmter Protokollkennungswerte als Verschlüsselungshinweis und Mittel zum Bilden der Kurzdatennachricht (60) umfasst, um die verschlüsselungsanzeigende Protokollkennung (61) zu umfassen, gefolgt von einem verschlüsselten Teil (65) der Kurzdatennachricht beinhaltend eine Protokollkennung (63) für die Nachricht, die verschlüsselt ist und die verschlüsselte Nachricht (64).

21. Vorrichtung nach Anspruch 20, wobei der Verschlüsselungshinweis der verschlüsselten Nachricht vorangeht.

22. Vorrichtung nach Anspruch 20 oder 21, wobei die Kurzdatennachricht, die übertragen wird, in eine Standardkurzdatennachrichtenstruktur des TETRA-Kommunikationssystems gepackt ist.

23. Vorrichtung nach Anspruch 20, 21 oder 22, wobei die Kurzdatennachricht als eine Typ-4 SDS-Nachricht versendet wird.

24. Vorrichtung nach Anspruch 23, wobei die Nachricht als eine Typ-4 SDS-Nachricht, die SDS-TL verwendet, versendet wird und der TL-Header (78) unverschlüsselt versendet wird.

25. Vorrichtung nach einem der Ansprüche 20 bis 24, ferner mit Mitteln (102, 103) zum Aufnehmen von Verschlüsselungsinformation (62) in der übertragenen Kurzdatennachricht, um den Empfänger zu unterstützen, die Nachricht zu entschlüsseln.

26. Vorrichtung nach einem der Ansprüche 20 bis 25, wobei zwei verschlüsselungsanzeigende Protokollkennungswerte verwendet werden, wobei ein Wert eine verschlüsselte SDS-Nachricht anzeigt und der andere eine verschlüsselte SDS-Nachricht, die SDS-TL verwendet, anzeigt.

27. Vorrichtung nach einem der Ansprüche 20 bis 26, mit Mitteln (102) zum Anordnen der in einer verschlüsselten Form zu versendenden Nachricht teilweise oder vollständig in eine normale Kurzdatennachrichtenstruktur für das TETRA-Kommunikationssystem mit einigen oder allen der üblichen Kurzdatennachrichtsystemdatenheadern und -feldern; Mittel (103) zum Verschlüsseln der so gebildeten Kurzdatennachricht oder des Kurzdatennachrichtenteils; und Mittel (102) zum Einbinden der verschlüsselten so gebildeten Kurzdatennachricht oder des Kurzdatennachrichtenteils mit dem Verschlüsselungshinweis in der Kurzdatennachricht, die übertragen wird.

28. Vorrichtung nach einem der Ansprüche 20 bis 27, mit:
Mitteln (105) zum Bilden der zu verschlüsselnden Nachricht;
Mitteln (102) zum Bereitstellen eines Protokollkennungswertes für die zu verschlüsselnde Nachricht;
Mitteln (103) zum Verschlüsseln der zu verschlüsselnden Nachricht und deren Protokollkennungswerts;
Mitteln (102) zum Packen der verschlüsselten Nachricht (64) und des verschlüsselten Protokollkennungswertes (63) in einem TETRA SDS-Nachrichtenformat;
Mitteln (102) zum Bereitstellen der so gebildeten SDS-Nachricht mit einem weiteren Protokollkennungswert (61), der die SDS-Nachricht als eine eine verschlüsselte Nachricht enthaltende Nachricht identifiziert; und
Mitteln zum Übertragen der so konstruierten Kurzdatennachricht.

29. Vorrichtung nach Anspruch 28, wobei das Kurzdatennachrichtenformat, in welchem die Originalnachricht verpackt ist, entweder das SDS-Nachrichtenformat oder die SDS-Nachricht, die das SDS-TL-Format verwendet, ist.

30. Vorrichtung nach Anspruch 27, 28 oder 29, ferner mit Mitteln (102) zum Markieren der Originalkurzdatennachricht mit einer temporären Kennungsmarke bevor diese verschlüsselt wird, wobei die Marke bei dem Verschlüsselungsprozess unverändert bleibt, so dass die Vorrichtung die verschlüsselte Kurzdatennachricht identifizieren kann.

31. Vorrichtung nach Anspruch 27, 28, 29 oder 30, ferner mit Merkmalen von einem der Ansprüche 20 bis 26.

32. Vorrichtung zur Verwendung eines TETRA mobilen Kommunikationssystems mit Mitteln zum Übertragen oder Mitteln zum Empfangen einer Typ-4 SDS-Nachricht gemäß einem der Ansprüche 20 bis 31.

33. Eine Kurzdatennachricht für ein TETRA mobiles Kommunkationssystem mit: einer verschlüsselten Nachricht (64) und einem Hinweis, dass die Kurzdatennachricht eine verschlüsselte Nachricht umfasst, wobei der Verschlüsselungshinweis einen bestimmten Protokollkennungswert umfasst und die Kurzdatennachricht (60) **dadurch gekennzeichnet ist, dass** sie die verschlüsselungshinweisende Protokollkennung (61), die von einem verschlüsselten Teil (65) der Kurzdatennachricht gefolgt ist, die eine Protokollkennung (63) für die Nachricht, die verschlüsselt ist und die verschlüsselte Nachricht (64) umfasst, umfasst.

34. Kurzdatennachricht nach Anspruch 33, wobei der Verschlüsselungshinweis der verschlüsselten Nachricht vorangeht.

35. Kurzdatennachricht nach Anspruch 33 oder 34, wobei die Kurzdatennachricht eine TETRA Typ-4 SDS-Nachricht ist.

36. Kurzdatennachricht nach Anspruch 35, wobei die Nachricht eine Typ-4 SDS-Nachricht ist, die SDS-TL verwendet und der TL-Header (78) unverschlüsselt ist.

37. Kurzdatennachricht nach einem der Ansprüche 33 bis 36, ferner mit einer Verschlüsselungsinformation (62), um den Empfänger zu unterstützen, die Nachricht zu entschlüsseln.

38. Kurzdatennachricht nach Anspruch 37, wobei die Verschlüsselungsinformation dem Verschlüsselungshinweis folgt und außerhalb des verschlüsselten Teils der Kurzdatennachricht lokalisiert ist.

39. Ein Computerprogrammelement mit Computersoftwarecodeanteilen zum Ausführen des Verfahrens nach einem der Ansprüche 1 bis 19, wenn das Programmelement auf datenverarbeitenden Mitteln ausgeführt wird.

## Revendications

1. Procédé d'émission d'un message de données court dans un système de communications mobile TETRA, comprenant : lorsque le message de données court comprend un message chiffré, l'inclusion avec le message de données court d'une indication de ce fait ; le procédé étant **caractérisé en ce qu'**il comprend en outre : l'utilisation de valeurs d'identifiant de protocole particulières en tant qu'indication de chiffrement et la formation du message de données court (60) pour comprendre l'identifiant de protocole d'indication de chiffrement (61), suivi d'une partie chiffrée (65) du message de données court contenant un identifiant de protocole (63) pour le message qui est chiffré et le message chiffré (64).

2. Procédé selon la revendication 1, dans lequel l'indication de chiffrement précède le message chiffré.

3. Procédé selon la revendication 1 ou 2, dans lequel l'indication de chiffrement est également utilisée pour indiquer le type du message chiffré.

4. Procédé selon la revendication 1, 2 ou 3, dans lequel le message à envoyer sous une forme chiffrée comprend un message de texte, un message d'état, ou un message de mise à jour de position.

5. Procédé selon l'une quelconque des revendications 1 à 4, dans lequel le message de données court qui est transmis est englobé dans une structure de message de données court standard du système de communications TETRA.

6. Procédé selon l'une quelconque des revendications 1 à 5, dans lequel le message de données court est envoyé en tant que message SDS de type 4.

7. Procédé selon la revendication 6, dans lequel le message est envoyé en tant que message SDS de type 4 utilisant SDS-TL et l'en-tête TL (78) est envoyé non chiffré.

8. Procédé selon l'une quelconque des revendications 1 à 7, dans lequel le message de données court transmis comprend des informations de chiffrement (62) pour aider le destinataire à déchiffrer le message.

9. Procédé selon la revendication 8, dans lequel les informations de chiffrement suivent l'indication de chiffrement et sont situées hors de la partie chiffrée du message de données court.

10. Procédé selon l'une quelconque des revendications précédentes, comprenant en outre un rapport en retour d'un message d'erreur par le destinataire du message s'il ne peut pas déchiffrer le message.

11. Procédé selon la revendication 10, dans lequel le message d'erreur est envoyé en tant que court rapport dans le (PDU) de court rapport SDS TETRA, ou en tant que valeur particulière du paramètre d'état de livraison utilisé dans le PDU de rapport SDS.

12. Procédé selon l'une quelconque des revendications 1 à 11, dans lequel deux valeurs d'identifiant de protocole d'indication de chiffrement sont utilisées, l'une pour indiquer un message SDS chiffré, et l'autre pour indiquer un message chiffré utilisant SDS-TL.

13. Procédé selon l'une quelconque des revendications 1 à 11, dans lequel deux valeurs d'identifiant de protocole sont utilisées pour indiquer un message chiffré, l'une ayant son premier chiffre binaire mis à « 0 » qui est utilisé pour des messages SDS chiffrés et des messages SDS chiffrés utilisant SDS-TL avec un en-tête TL chiffré, et l'autre valeur d'identifiant de protocole ayant son premier chiffre binaire mis à « 1 » et qui est utilisé pour des messages SDS chiffrés utilisant SDS-TL avec un en-tête TL non chiffré.

14. Procédé selon l'une quelconque des revendications précédentes, comprenant l'agencement du message à envoyer sous une forme chiffrée dans une partie ou dans la totalité d'une structure normale de message de données court pour le système de communications TETRA comprenant certains ou la totalité des en-têtes et des champs de données de système de message de données court habituels ; le chiffrement du message de données court ou de la partie de message de données court ainsi formé ; et l'inclusion du message de données court ou de la partie de message de données court ainsi formé chiffré avec l'indication de chiffrement dans le message de données court qui est émis.

15. Procédé selon l'une quelconque des revendications précédentes, comprenant :
la formation du message (64) à chiffrer ;
la fourniture d'une valeur d'identifiant de protocole (63) pour le message à chiffrer ;
le chiffrement du message à chiffrer et de sa valeur d'identifiant de protocole ;
le fait d'englober le message chiffré et la valeur d'identifiant de protocole chiffrée dans un format de message SDS TETRA ;
la fourniture au message SDS ainsi formé d'une valeur d'identifiant de protocole supplémentaire (61) qui identifie le message SDS comme contenant un message chiffré ; et
l'émission du message de données court ainsi construit.

16. Procédé selon la revendication 15, dans lequel le format de message de données court dans lequel le message d'origine est englobé est soit le format de message SDS, soit le format de message SDS utilisant SDS-TL.

17. Procédé selon la revendication 14, 15 ou 16, comprenant en outre le marquage du message de données court d'origine avec une étiquette d'identité temporaire avant son chiffrement, laquelle étiquette n'est pas altérée par le processus de chiffrement, de sorte que le message de données court chiffré peut être identifié.

18. Procédé selon la revendication 14, 15, 16 ou 17, comprenant en outre les caractéristiques de l'une quelconque des revendications 1 à 13.

19. Procédé d'exploitation d'un système de communications mobile TETRA, comprenant l'émission ou la réception d'un message SDS de type 4 conformément à l'une quelconque des revendications 1 à 18.

20. Appareil pour l'émission d'un message de données court dans un système de communications mobile TETRA, l'appareil comprenant : des moyens (102) pour, lorsque le message de données court comprend un message chiffré, inclure avec le message de données court une indication de ce fait, et étant **caractérisé en ce qu'**il comprend des moyens pour utiliser des valeurs d'identifiant de protocole particulières en tant qu'indication de chiffrement et des moyens pour former le message de données court (60) pour comprendre l'identifiant de protocole d'indication de chiffrement (61), suivi d'une partie chiffrée (65) du message de données court contenant un identifiant de protocole (63) pour le message qui est chiffré et le message chiffré (64).

21. Appareil selon la revendication 20, dans lequel l'indication de chiffrement précède le message chiffré.

22. Appareil selon la revendication 20 ou 21, dans lequel le message de données court qui est émis est englobé dans une structure normale de message de données court du système de communications TETRA.

23. Appareil selon la revendication 20, 21 ou 22, dans lequel le message de données court est envoyé en tant que message SDS de type 4.

24. Appareil selon la revendication 23, dans lequel le message est envoyé en tant que message SDS de type 4 utilisant SDS-TL et l'en-tête TL (78) est envoyé non chiffré.

25. Appareil selon l'une quelconque des revendications 20 à 24, comprenant en outre des moyens (102, 103) pour inclure des informations de chiffrement dans le message de données court (62) émis pour aider le destinataire à déchiffrer le message.

26. Appareil selon l'une quelconque des revendications 20 à 25, dans lequel deux valeurs d'identifiant de protocole d'indication de chiffrement sont utilisées, l'une pour indiquer un message SDS chiffré, et l'autre pour indiquer un message SDS chiffré utilisant SDS-TL.

27. Appareil selon l'une quelconque des revendications 20 à 26, comprenant des moyens (102) pour agencer le message à envoyer sous une forme chiffrée dans une partie ou dans la totalité d'une structure normale de message de données court pour le système de communications TETRA comprenant certains ou tous les en-têtes et champs de données de système de message de données court habituels ; des moyens (103) pour chiffrer le message de données court ou la partie de message de données court ainsi formé ; et des moyens (102) pour inclure le message de données court ou la partie de message de données court ainsi formé chiffré avec l'indication de chiffrement dans le message de données court qui est émis.

28. Appareil selon l'une quelconque des revendications 20 à 27, comprenant :
des moyens (105) pour former le message à chiffrer ;
des moyens (102) pour fournir une valeur d'identifiant de protocole pour le message à chiffrer ;
des moyens (103) pour chiffrer le message à chiffrer et sa valeur d'identifiant de protocole ;
des moyens (102) pour englober le message chiffré (64) et la valeur d'identifiant de protocole chiffrée (63) dans un format de message SDS TETRA ;
des moyens (102) pour fournir au message SDS ainsi formé une valeur d'identifiant de protocole supplémentaire (61) qui identifie le message SDS comme contenant un message chiffré ; et
des moyens pour émettre le message de données court ainsi construit.

29. Appareil selon la revendication 28, dans lequel le format de message de données court dans lequel le message d'origine est englobé est soit le format de message SDS, soit le format de message SDS utilisant SDS-TL.

30. Appareil selon la revendication 27, 28 ou 29, comprenant en outre des moyens (102) pour marquer le message de données court d'origine avec une étiquette d'identité temporaire avant son chiffrement, laquelle étiquette n'est pas altérée par le processus de chiffrement, de sorte que l'appareil peut identifier le message de données court chiffré.

31. Appareil selon la revendication 27, 28, 29 ou 30, comprenant en outre les caractéristiques de l'une quelconque des revendications 20 à 26.

32. Appareil à utiliser dans un système de communications mobile TETRA, comprenant des moyens pour émettre ou des moyens pour recevoir un message SDS de type 4 conformément à l'une quelconque des revendications 20 à 31.

33. Message de données court pour un système de communications mobile TETRA, comprenant : un message chiffré (64), et une indication selon laquelle le message de données court comprend un message chiffré ; dans lequel l'indication de chiffrement comprend une valeur d'identifiant de protocole particulière et le message de données court (60) est **caractérisé en ce qu'**il comprend l'identifiant de protocole d'indication de chiffrement (61) suivi d'une partie chiffrée (65) du message de données court contenant un identifiant de protocole (63) pour le message qui est chiffré et le message chiffré (64).

34. Message de données court selon la revendication 33, dans lequel l'indication de chiffrement précède le message chiffré.

35. Message de données court selon la revendication 33 ou 34, dans lequel le message de données court est un message SDS de type 4.

36. Message de données court selon la revendication 35, dans lequel le message est un message SDS de type 4 utilisant SDS-TL et l'en-tête TL (78) est non chiffré.

37. Message de données court selon l'une quelconque des revendications 33 à 36, comprenant en outre des informations de chiffrement (62) pour aider le destinataire à déchiffrer le message.

38. Message de données court selon la revendication 37, dans lequel les informations de chiffrement suivent l'indication de chiffrement et sont situées hors de la partie chiffrée du message de données court.

39. Élément de programme informatique comprenant des portions de code de logiciel informatique pour exécuter le procédé de l'une quelconque des revendications 1 à 19 lorsque l'élément de programme fonctionne sur des moyens de traitement de données.
